# EUROPEAN PATENT APPLICATION

(11) **EP 2 667 284 A1**
(43) Date of publication of application: **27.11.2013**
(21) Application number: 11856057.2
(22) Date of filing: 19.10.2011
(51) Int. Cl.: G06F 1/32, G06F 1/04

(54) **CONTROL SYSTEM**

(30) Priority: 20.01.2011 JP 2011009722
(71) Applicant: NEC CASIO Mobile Communications, Ltd., Kawasaki-shi Kanagawa 211-8666 (JP)
(72) Inventor: HAYASHI, Masakazu, Kawasaki-shi Kanagawa 211-8666 (JP)
(74) Representative: Vossius & Partner
(86) International application number: PCT/JP2011/074043
(87) International publication number: WO 2012/098741

(57) **Abstract**

If switching function occurs in such a manner that the frequency of a clock signal supplied from clock supply section (230), that supplies the clock signal having the highest frequency in frequencies corresponding to functions with which CPU (300) is provided, to CPU (300) for the latter function is lower than that for the former function, after the frequency of the clock signal for the latter function has been set up, said power supply unit (500) supplies the power voltage corresponding to the changed frequency to CPU (300). If switching function occurs in such a manner that the frequency of the clock signal supplied from clock supply section (230) for the latter function is higher than that for the former function, after the voltage supplied from power supply unit (500) has been changed, clock supply section (230) supplies the clock signal having the frequency corresponding to the latter function.

## Description

### TECHNICAL FIELD

The present invention relates to a control system and a control device that control a power voltage and the frequency of a clock signal that are supplied.

### BACKGROUND ART

In recent years, demands for mobile devices such as mobile terminals that consume low power have become strong. System LSI mounted on such mobile devices are provided with functions that serve to realize low power consumption. Some mobile devices use a function that is referred to as "DVFS" (Dynamic Voltage and Frequency Scaling) that dynamically changes the power voltage and clock frequency so as to realize low power consumption.

This function sets up desired clock frequency and power voltage corresponding thereto for the system so as to realize low power consumption. Mobile devices of another type use an IEM (Intelligent Energy Manager) function that a CPU (Central Processing Unit) executes so as to realize low power consumption (for example, refer to Non-Patent Literature 1).

However, if mobile devices are equipped with IEM, they need to be individually tuned with respect to software and policy settings.

To solve such restrictions, a technique in which power voltages and clock frequencies corresponding to applications are pre-defined and software sets up the pre-defined power voltages and clock frequencies corresponding to the applications that start up has been employed.

### RELATED ART LITERATURE

### NON-PATENT LITERATURE

Non-Patent Literature 1: "IEM Technology, ARM Intelligent Energy Manager (IEM) Technology," ARM (The ARCHITECTURE FOR THE DIGITAL WORLD), [online], [searched on January 13, 2011], Internet address <URL: http:/www.jp.arm.com /products/processors/cpu-arch-iem.html>

### SUMMARY OF THE INVENTION

### PROBLEM TO BE SOLVED BY THE INVENTION

Fig. 1 is a time chart showing an example of a timing at which switching from a lower frequency of a clock signal supplied to the CPU to a higher frequency by an ordinary DVFS occurs.

Fig. 2 is a time chart showing an example of a timing at which switching from a higher frequency of a clock signal supplied to the CPU to a lower frequency by an ordinary DVFS occurs.

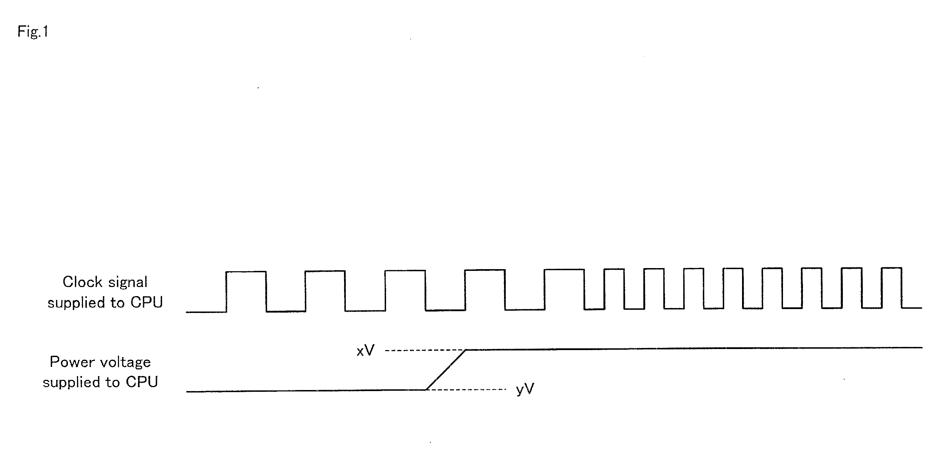

As shown in Fig. 1, if a lower clock frequency is switched to a higher clock frequency, after the power voltage supplied to the CPU is raised, the higher clock frequency needs to be supplied to the CPU.

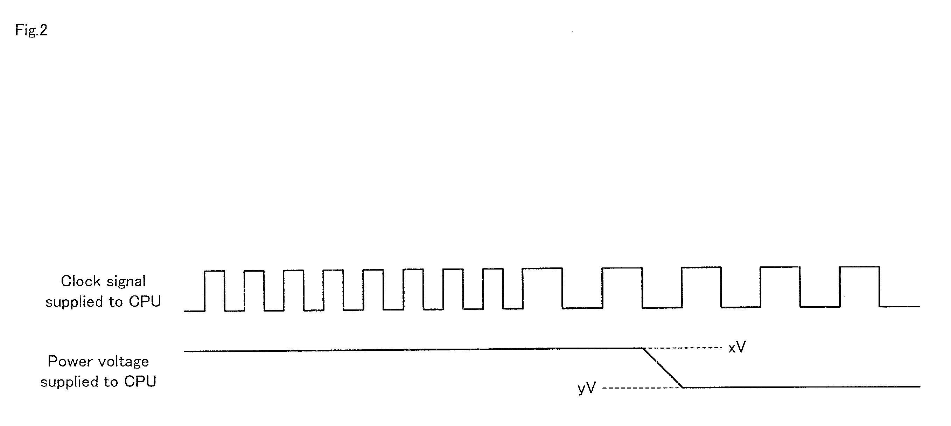

In contrast, as shown in Fig. 2, if a higher clock frequency is switched to a lower clock frequency, after the lower clock frequency is supplied to the CPU, the power voltage supplied to the CPU needs to be lowered.

Thus, the power voltage needs to be controlled before or after the clock frequency is controlled depending on whether the clock frequency is raised or lowered so as to prevent the power voltage and clock frequency from causing the system to fail.

If the correlations between functions and clock frequencies (x MHz, y MHz, etc.) are known, the clock frequencies can be changed corresponding to functions that start up.

However, if such correlations are controlled by software, a problem in which its processes become complicated will occur.

If a mobile terminal is provided with a system LSI, such functions operate, for example, when a voice communication and a game application start up.

In addition, the clock frequency cannot be increased unless necessary power voltage is applied. Another problem in which software manages many complicated processes that determine whether the clock frequency needs to be increased or lowered will occur.

An object of the present invention is to provide a control system and a control device that can solve the foregoing problems.

### MEANS THAT SOLVE THE PROBLEM

A control system according to the present invention is a control system that includes:
a power supply unit that supplies a plurality of power voltages; and
a control unit connected to the power supply unit and a CPU,
wherein said control unit includes:
   a storage section that correlatively stores power voltages and frequencies of a clock signal that a plurality of functions with which said CPU is provided need;
   a power supply control section that causes said power supply unit to supply the highest power voltage from among those power voltages corresponding to functions that operate in said plurality of functions stored in said storage section; and
   a clock supply section that supplies the clock signal having the highest frequency from among those frequencies corresponding to functions that operate in said plurality of functions stored in said storage section,
   wherein said power supply unit includes:
      a power supply section that supplies the power voltage specified by said power supply control section to said CPU; and
      an interrupt notification section that notifies said control unit that the power voltage supplied from said power supply section has changed,
      wherein if switching from one function to another function occurs in such a manner that the frequency of the clock signal supplied from said clock supply section for the latter function is lower than that for the former function, after the frequency of the clock signal for the latter function has been set up, said power supply control section causes said power supply section to supply the power voltage corresponding to the changed frequency, and
      wherein if switching from one function to another function occurs in such a manner that the frequency of the clock signal supplied from said clock supply section for the latter function is higher than that for the former function, after said notification is received from said interrupt notification section, said clock supply section supplies the clock signal having the frequency corresponding to the latter function.

A control device according to the present invention is a control device that includes:
a storage section that stores power voltages and frequencies of a clock signal that a plurality of functions with which a CPU connected to the control device is provided need;
a power supply control section that causes a power supply unit to supply the highest power voltage from among those power voltages corresponding to functions that operate in said plurality of functions stored in said storage section to said CPU; and
a clock supply section that supplies the clock signal having the highest frequency from among those frequencies corresponding to functions that operate in said plurality of functions stored in said storage section,
wherein if switching from one function to another function occurs in such a manner that the frequency of the clock signal supplied from said clock supply section for the latter function is lower than that for the former function, after the frequency of the clock signal for the latter function has been set up, said power supply control section causes said power supply section to supply the power voltage corresponding to the changed frequency, and
wherein if switching from one function to another function occurs in such a manner that the frequency of the clock signal supplied from said clock supply section for the latter function is higher than that for the former function, after the voltage supplied from said power supply unit has been changed, said clock supply section supplies the clock signal having the frequency corresponding to the latter function.

### EFFECT OF THE INVENTION

As described above, according to the present invention, processes managed by software can be simplified and low power reduction can be effectively realized.

### BRIEF DESCRIPTION OF DRAWINGS

Fig. 1 is a time chart showing an example of a timing at which switching from a lower frequency of a clock signal supplied to the CPU is switched to a higher frequency by an ordinary DVFS occurs.
Fig. 2 is a time chart showing an example of a timing at which switching from a higher frequency of a clock signal supplied to the CPU is switched to a lower frequency by an ordinary DVFS occurs.

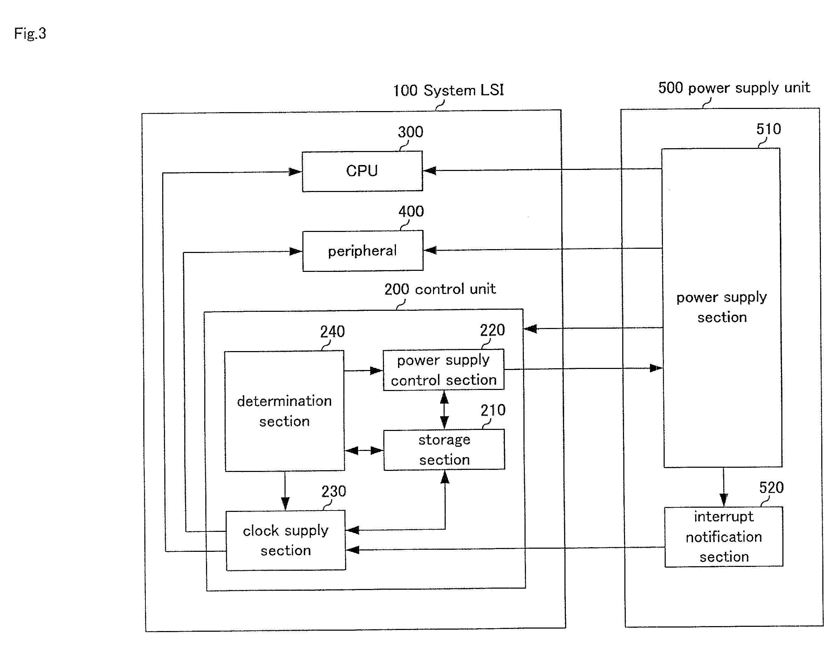

Fig. 3 is a schematic diagram showing a control system according to an embodiment of the present invention.

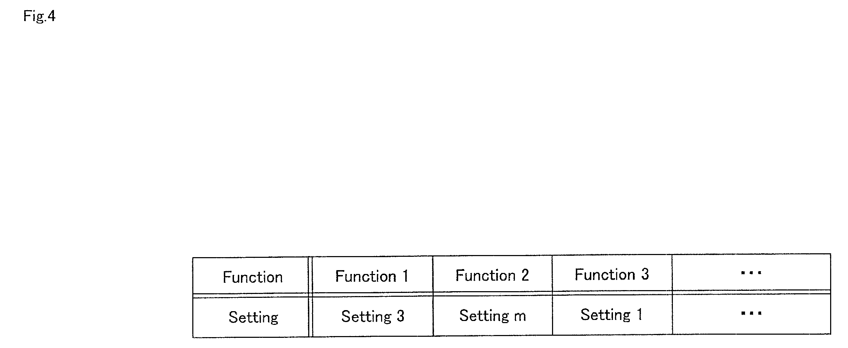

Fig. 4 is a schematic diagram showing an example of correlations of functions and settings stored in a storage section shown in Fig. 3.

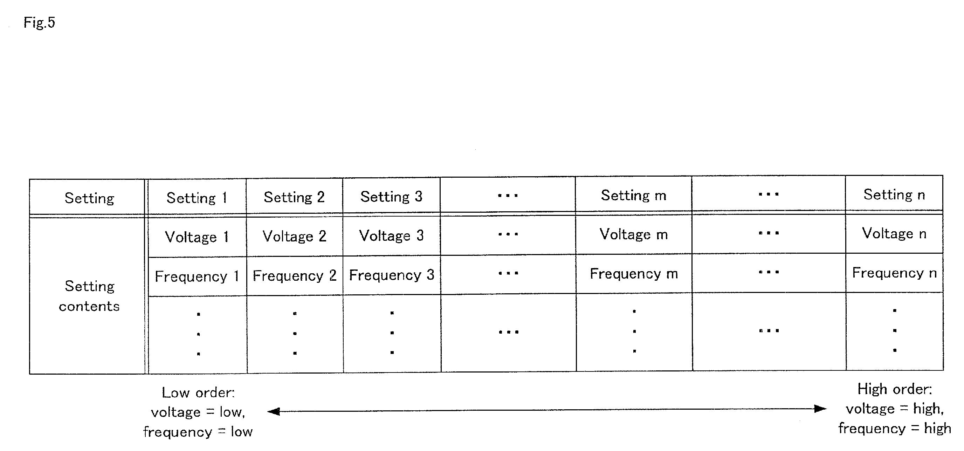

Fig. 5 is a schematic diagram showing an example of setting contents of power voltages, clock frequencies, and so forth stored in the storage section shown in Fig. 3.

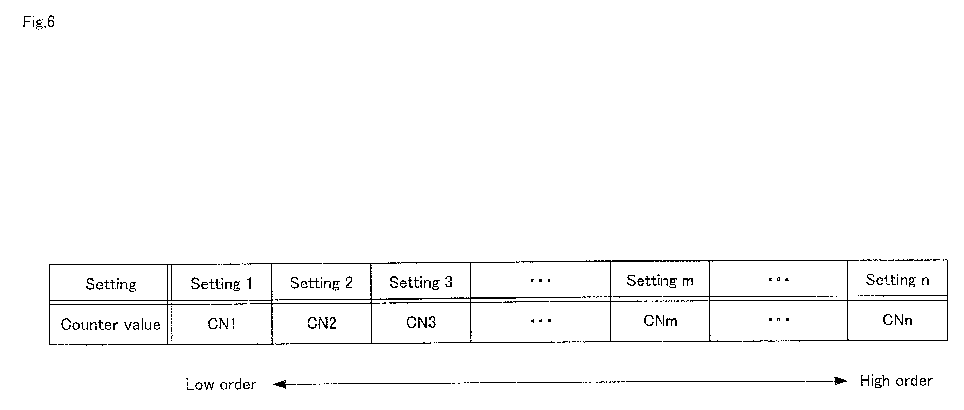

Fig. 6 is a schematic diagram showing an example of a counter table stored in the storage section shown in Fig. 3.

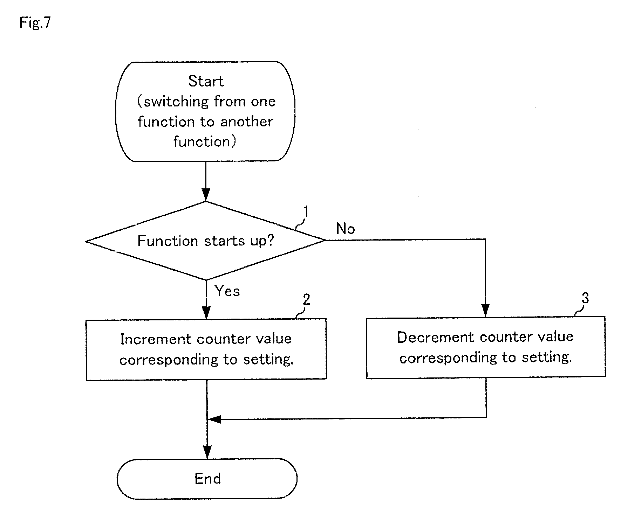

Fig. 7 is a flow chart describing a process performed when switching from a function that operates in a plurality of functions with which CPU 300 shown in Fig. 3 is provided to another function occurs.

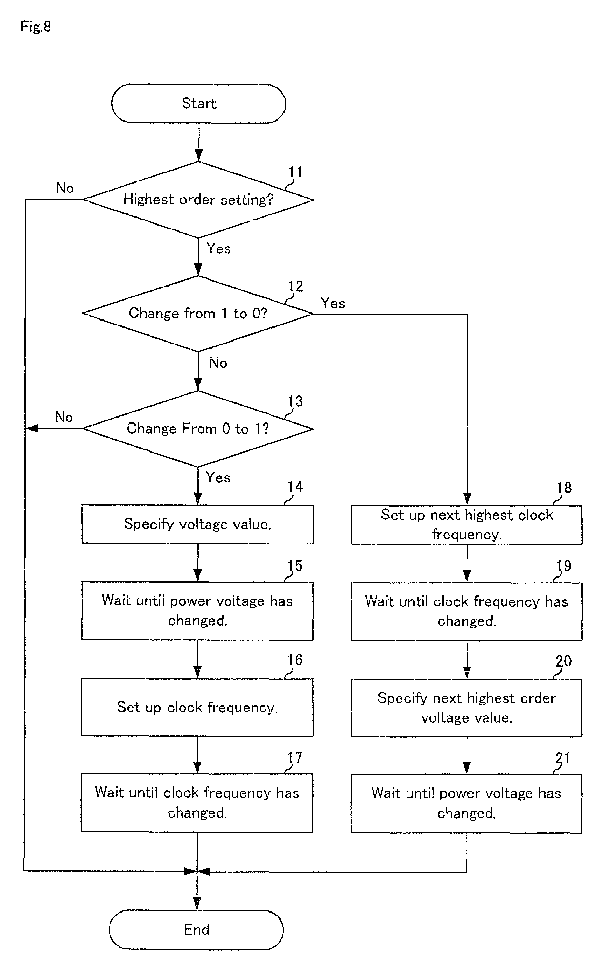

Fig. 8 is a flow chart describing a process performed when a counter value of the counter table stored in the storage section shown in Fig. 3 changes.

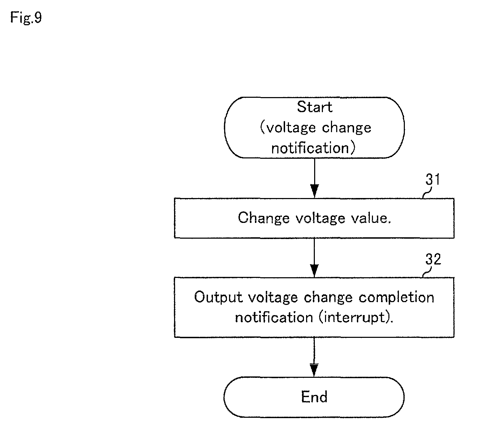

Fig. 9 is a flow chart describing a process that a power supply unit performs when it is caused to supply power at step 14 shown in Fig. 8.

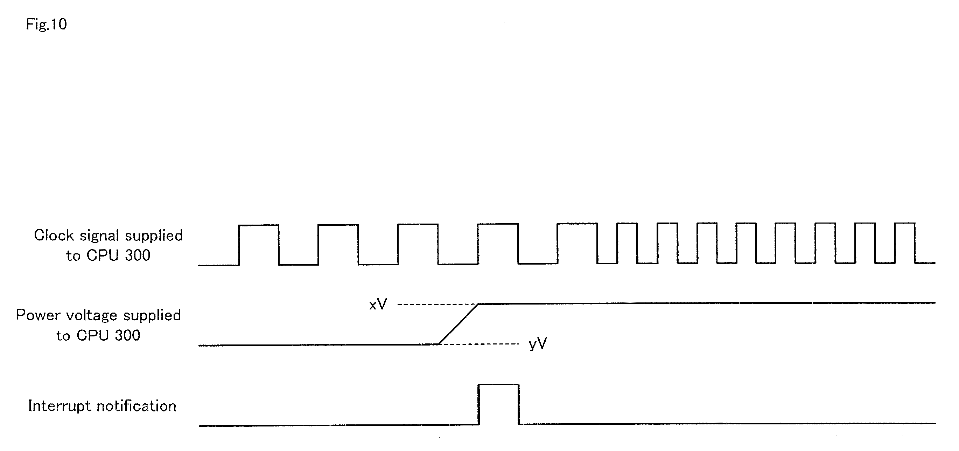

Fig. 10 is a schematic diagram showing an example of a timing at which the power supply unit shown in Fig. 3 outputs a voltage change completion notification (interrupt notification).

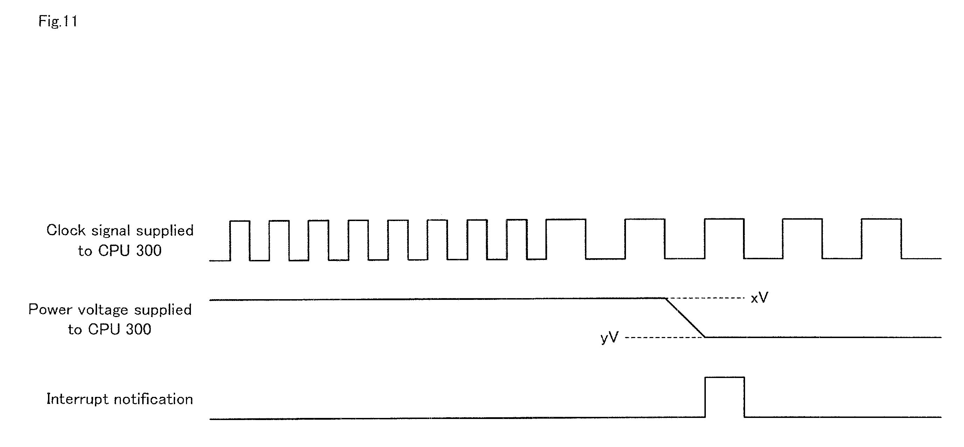

Fig. 11 is a schematic diagram showing another example of a timing at which the power supply unit shown in Fig. 3 outputs a voltage change completion notification (interrupt notification).

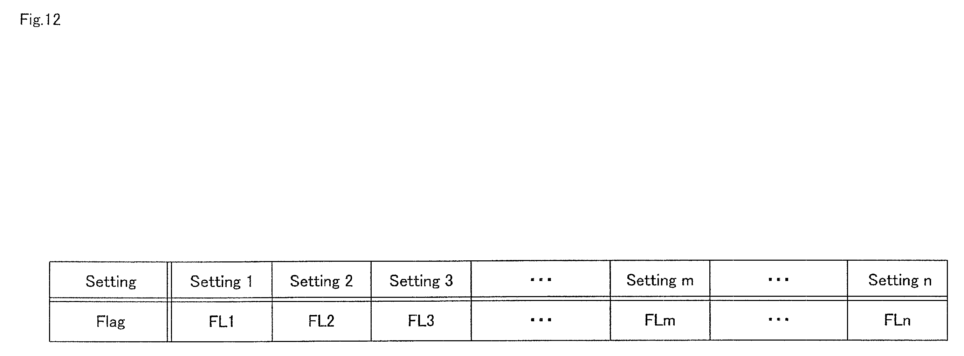

Fig. 12 is a schematic diagram showing an example of a flag table stored in the storage section shown in Fig. 3.

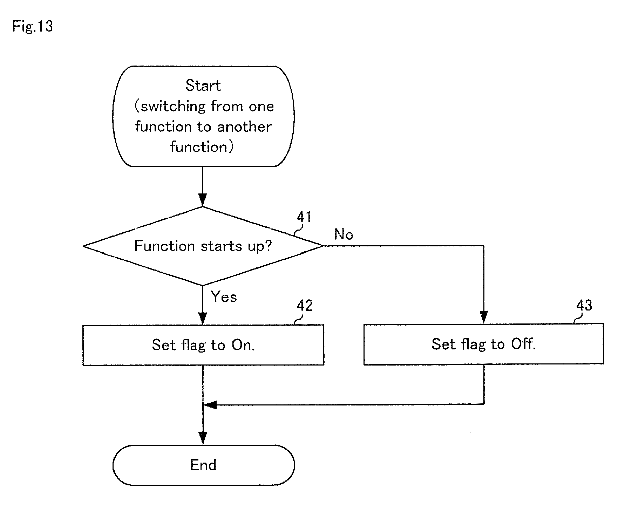

Fig. 13 is a flow chart describing a process performed when switching from one function, that operates in the plurality of functions, with which the CPU shown in Fig. 3 is provided, to another function occurs based on the flag table according to this embodiment.

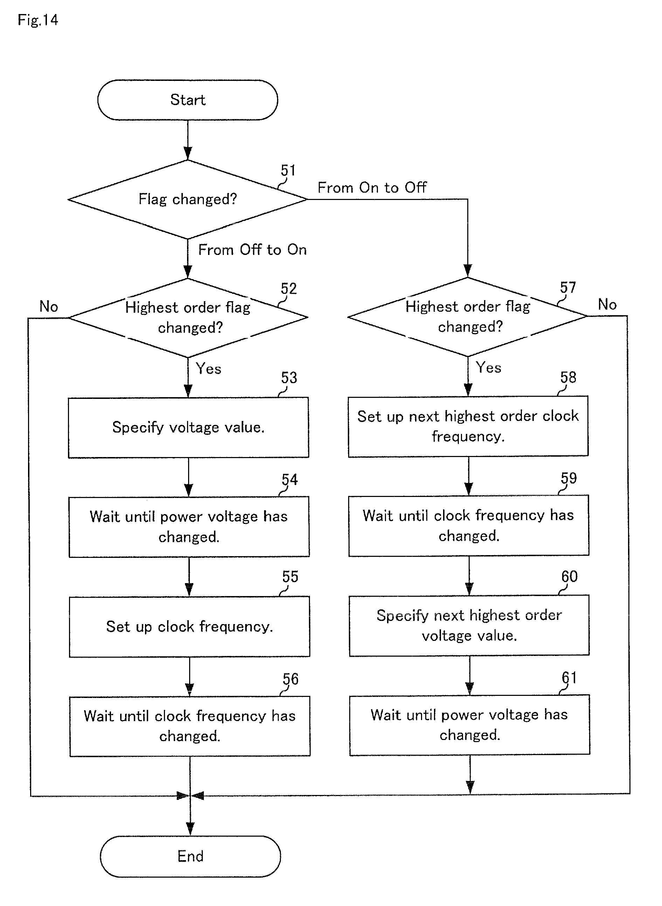

Fig. 14 is a flow chart describing a process performed when a flag of the flag table stored in the storage section shown in Fig. 3 changes.

### BEST MODES THAT CARRY OUT THE INVENTION

Next, with reference to the drawings that are provided, embodiments of the present invention will be described.

Fig. 3 is a schematic diagram showing a control system according to an embodiment of the present invention.

As shown in Fig. 3, the control system according to this embodiment is composed of system LSI 100 and power supply unit 500 that is a power supply LSI that supplies power to system LSI 100.

System LSI 100 is provided with control unit 200 that is a power supply frequency control section; CPU 300; and peripheral 400.

Power supply unit 500 is provided with power supply section 510 and interrupt notification section 520.

Control unit 200 is provided with storage section 210, power supply control section 220, clock supply section 230, and determination section 240.

Storage section 210 pre-stores power voltages and clock frequencies that a plurality of functions, with which CPU 300 is provided, need. Storage section 210 may be composed of a register.

Fig. 4 is a schematic diagram showing an example of the correlations between the functions and settings that are stored in storage section 210 shown in Fig. 3.

As shown in Fig. 4, storage section 210 shown in Fig. 3 correlatively stores the plurality of functions, with which CPU 300 is provided, and the settings that the functions that operate need. In this context, the "functions" stored in storage section 210 might be information that identifies the functions that CPU 300 performs. On the other hand, the "settings" stored in storage section 210 might be information that specifies settings that the functions that operate need.

Fig. 5 is a schematic diagram showing an example of setting contents such as power voltages, clock frequencies, and so forth stored in storage section 210 shown in Fig. 3.

As shown in Fig. 5, storage section 210 shown in Fig 3 correlatively stores power voltages (voltage values) and clock frequencies with the plurality of settings shown in Fig. 4. If storage section 210 stores n settings from setting 1 to setting n (where n is a natural number), it can store n sets of setting contents. The setting contents are pre-set from the outside of the control system.

For example, if there is communication interface 11C between CPU 300 and power supply unit 500, storage section 210 stores setting contents including power voltages and clock frequencies that the communication function needs. Alternatively, storage section 210 might pre-store addresses or sub addresses that represent voltage values and so forth.

The power voltage and clock frequency of setting 1 (low order) are the lowest, whereas the power voltage and clock frequency of setting n (high order) are the highest. In other words, the power voltage and clock frequency rise in the order from setting 1 to setting n.

Storage section 210 stores a counter table containing counter values corresponding to the plurality of settings.

Fig. 6 is a schematic diagram showing an example of the counter table stored in storage section 210 shown in Fig. 3.

As shown in Fig. 6, the counter table stored in storage section 210 shown in Fig. 3 contains counter values corresponding to the plurality of settings shown in Fig. 5. The counter values that are contained in the counter table are those counted by a counter (not shown) located in control unit 200.

If a function corresponding to setting m of clock frequency m operates, the counter value of setting m is incremented on the counter table. In contrast, if the function corresponding to setting m becomes unnecessary, namely the function corresponding to setting m stops, the counter value of setting m is decremented on the counter table. The counter is used because one DVFS setting is not always assigned to one function, but might be assigned to two or more functions if necessary. If the counter value is 0, clock frequency m of setting m becomes unnecessary. If the counter value is 1 or greater, clock frequency m of setting m becomes necessary. If the upper limit of the counter is 255 (the maximum number of functions that can be registered to one setting), the counter for each setting might be 1 byte.

Like the setting contents shown in Fig. 5, setting 1 is the lowest order and setting n is the highest order on the counter table shown in Fig. 6.

If one of the plurality of functions with which CPU, 300 is provided starts up or stops, determination section 240 determines that switching from one function to another function occurs. If determination section 240 determines that switching from one function to another function occurs, determination section 240 compares the frequency of the clock signal that clock supply section 230 supplied before the switching occurred with the frequency of the clock signal that clock supply section 230 is currently supplying.

Power supply control section 220 causes power supply unit 500 to supply power at the highest voltage from among those voltages corresponding to the functions that operate in the plurality of functions stored in storage section 210. If switching from one function to another function whose frequency of the clock signal that clock supply section 230 supplies is lower than the frequency of the clock signal that it supplied when the former function operated occurs, after the clock signal having the frequency corresponding to the latter function has been supplied, power supply control section 220 causes power supply unit 500 to supply power at the voltage corresponding to the frequency of the clock signal at which the latter function operates.

In addition, power supply control section 220 performs the foregoing process based on the comparison result made by determination section 240.

Clock supply section 230 generates a clock signal having the highest clock frequency from among those clock frequencies corresponding to the functions that operate in the plurality of functions stored in storage section 210and supplies the generated clock signal to CPU 300. If switching form one function to another function whose frequency of the clock signal is higher than the frequency of the clock signal that clock supply section 230 supplied for the former function occurs, after receiving the notification from interrupt notification section 520, clock supply section 230 supplies the frequency of the clock signal corresponding to the new function.

If determination section 240 determines that the switching from one function to another function occurs, clock supply section 230 compares the frequency of the clock signal that clock supply section 230 supplied before the switching from one function to another function occurred with the frequency of the clock signal that clock supply section 230 is supplying and performs the foregoing process based on the comparison result.

CPU 300 controls control unit 200 and peripheral 400. In addition, CPU 300 is provided with the plurality of functions.

Peripheral 400 is an ordinary peripheral function that excludes memory and that is provided in system LSI 100. Peripheral 400 is composed of a plurality of functions (units). According to this embodiment, functions (units) that constitute the peripheral function are generally referred to as peripheral 400.

Power supply section 510 can supply a plurality of power voltages. In addition, power supply section 510 supplies a power voltage specified by power supply control section 220 (CPU, power) to CPU 300. Moreover, power supply section 510 supplies a power voltage specified by power supply control section 220 (peripheral power) to peripheral 400. It is clear that power supply section 510 supplies a predetermined power voltage (control unit power) to control unit 200.

If the power voltage supplied from power supply section 510 has changed, interrupt notification section 520 notifies clock supply section 230 located in control unit 200 of an interrupt signal that denotes that the voltage has changed.

This embodiment does not specify the type of the interface between system LSI 100 and power supply unit 500. Thus, the interface might be a serial bus.

Next, processes performed in the control system according to this embodiment will be described.

Fig. 7 is a flow chart describing a process performed when switching from one function that operates in a plurality of functions with which CPU 300 shown in Fig. 3 is provided to another function occurs.

If switching from one function to another function occurs, determination section 240 determines whether a function, that does not operate, starts up or a function that operates stops at step 1.

If determination section 240 determines that a function, that does not operate, starts up, a setting that the function needs is read from storage section 210. Thereafter, a counter value corresponding to the setting that is read is incremented at step 2. The incremented counter value and the relevant setting on the counter table are correlatively stored in storage section 210.

In contrast, if determination section 240 determines, that a function that operates stops, a setting that the function needs is read from storage section 210. Thereafter, a counter value corresponding to the setting that is read is decremented at step 3. The decremented counter value and the relevant setting on the counter table are correlatively stored in storage section 210.

Next, a process performed in the control device when a counter value of the counter table stored in storage section 210 shown in Fig. 3 changes will be described. This process is a hardware process performed after steps 2 and 3 shown in Fig. 7.

Fig. 8 is a flow chart describing a process performed when a counter value of the counter table stored in storage section 210 changes. In this example, it is assumed that the counter value corresponding to "setting m" on the counter table changes.

When switching from one function to another function occurs, determination section 240 determines whether or not setting m whose counter value is 1 or greater and that changes is the highest order (whether setting m is located at the rightmost position in the example shown in Fig. 5) at step 11.

If setting m is not the highest order, since the power voltage and clock frequency do not change, the process is completed.

In contrast, if setting m is the highest order, determination section 240 determines whether the counter value changes from "1" to "0" at step 12.

If the counter value does not change from "1" to "0," determination section 240 determines whether or not the counter value changes from "0" to "1" at step 13.

If the counter value does not change from "0" to "1," since the power voltage and clock frequency do not change, the process is completed.

In contrast, if the counter value changes from "0" to "1," since the frequency of the clock signal needs to be increased, power supply control section 220 reads the power voltage corresponding to setting m from storage section 210. Thereafter, power supply control section 220 causes power supply section 510 to supply the power voltage that is read from storage section 210 at step 14.

As a result, power supply section 510 changes the power voltage that is supplied.

Fig. 9 is a flow chart describing a process that power supply unit 500 performs when it is caused to supply power at step 14 shown in Fig. 8.

When power supply control section 220 causes power supply section 510 to supply the specified power voltage, the power voltage that is supplied is changed at step 31.

When power supply section 510 has changed the power voltage, it notifies interrupt notification section 520 that the power voltage has changed. Thereafter, interrupt notification section 520 outputs a voltage change completion notification to clock supply section 230 located in control unit 200 at step 32. This notification may be output as an interrupt signal.

Fig. 10 is a schematic diagram showing an example of a timing at which power supply unit 500 shown in Fig. 3 outputs the voltage change completion notification (interrupt notification).

Fig. 11 is a schematic diagram showing another example of a timing at which power supply unit 500 shown in Fig. 3 outputs the voltage change completion notification (interrupt notification).

As shown in Fig. 10 and Fig. 11, after a power voltage supplied from power supply section 510 to CPU 300 has changed, power supply section 510 outputs an interrupt notification. In Fig. 10 and Fig. 11, the voltage change completion notification is, for example, a positive pulse signal (with any pulse width). Alternatively, the voltage change completion notification might be a negative pulse signal or a signal having a level using a leading edge or a trailing edge that represents the interrupt notification.

As shown in Fig. 10, when the clock frequency and power voltage are increased, after the power voltage is increased, the frequency is increased. In contrast, as shown in Fig. 11, when the clock frequency and power voltage are lowered, after the clock frequency is lowered, the voltage is lowered.

The changed voltage value is supplied form power supply section 510 to CPU 300.

After step 14, control unit 200 waits until the voltage has changed at step 15. Specifically, control unit 200 waits until power supply unit 500 has outputs the voltage change completion notification.

When power supply unit 500 outputs the voltage change completion notification, clock supply section 230 reads the frequency of the clock signal corresponding to setting m from storage section 210. Thereafter, the frequency of the clock signal that is read from storage section 210 is set up (generated) as the frequency of the clock signal supplied to CPU 300. Control unit 200 waits until the frequency of the clock signal has been set up, namely the frequency of the clock signal has changed at step 17.

Thereafter, the clock signal having the frequency that has been set up is supplied from clock supply section 230 to CPU 300.

In contrast, if the counter value changes from "1" to "0" at step 12, since all functions that need setting m are not used, setting m becomes unnecessary.

Since setting m becomes unnecessary, the second highest setting, which is lower than setting m, in all settings whose counter value of the counter table is 1 or greater, is retrieved. In this example, it is assumed that setting 3 has been retrieved.

The clock frequency and power voltage corresponding to setting m are lowered to those corresponding to setting 3. When the clock frequency and power voltage are lowered, as described above, after the clock frequency is lowered, the power voltage is lowered.

First, clock supply section 230 reads the frequency of the clock signal corresponding to setting 3 from storage section 210. Thereafter, the frequency of the clock signal that is read from storage section 210 is set up (generated) as the frequency of the clock signal supplied to CPU 300 at step 18. Control unit 200 waits until the frequency of the clock signal has been set up, namely the frequency of the clock signal has changed, at step 19.

Thereafter, the frequency of the clock signal that has been set up is supplied from clock supply section 230 to CPU 300.

Thereafter, power supply control section 220 reads the power voltage corresponding to setting 3 from storage section 210. Thereafter, power supply control section 220 causes power supply section 510 to supply the power voltage that has been read at step 20.

Thereafter, power supply control section 220 waits until the power voltage has changed at step 21. Specifically, power supply control section 220 waits until power supply unit 500 outputs the voltage change completion notification. Thereafter, the process is completed.

If individual functions correspond to individual settings, a flag that denotes, that a function (setting) operates, may be used instead of the foregoing counter table.

Fig. 12 is a schematic diagram showing an example of a flag table stored in storage section 210 shown in Fig. 3.

As shown in Fig. 12, flags FL1 to FLn corresponding to setting 1 to setting n are stored. For example, a flag corresponding to a setting for a function that operates may be "On," whereas a flag corresponding to a setting for a function that does not operate may be "Off." If each flag is composed of 1 bit, "On" may be "1" and "Off" may be "0."

If such a flag table is used, a function that operates can be distinguished from a function that does not operate. Thus, the necessary clock frequency and power voltage can be obtained based on the correlations shown in Fig. 4.

Next, a process that is performed when switching from one function that operates in a plurality of functions, with which CPU 300 shown in Fig. 3 is provided, to another function occurs based on the flag table according to this embodiment will be described.

Fig. 13 is a flow chart describing the process performed when switching from one function that operates in the plurality of functions, with which CPU 300 shown in Fig. 3 is provided, to another function occurs based on the flag table according to this embodiment.

When switching from one function to another function occurs, determination section 240 determines whether a function that does not operate starts up or a function that operates stops at step 41.

If determination section 240 determines that a function that does not operate starts up, a setting that the function needs is read from storage section 210 and the flag corresponding to the setting that is read from storage section 210 is set to "On" (rewritten) at step 42.

In contrast, if determination section 240 determines that a function that operates stops, the setting that the function needs is read from storage section 210. Thereafter, the flag corresponding to the setting is set to "Off" (rewritten) at step 43.

Next, a process performed when a flag of the flag table stored in storage section 210 shown in Fig. 3 changes will be described.

Fig. 14 is a flow chart that describes a process performed when a flag of the flag table stored in storage section 210 shown in Fig. 3 changes. In this example, it is assumed that a flag corresponding to "setting m" changes on the flag table.

When switching from one function to another function occurs, determination section 240 determines whether the flag corresponding to setting m has changed from "Off" to "On" or "On" to "Off" at step 51.

If determination section 240 determines that the flag has changed from "Off" to "On," determination section 240 determines whether setting m is the highest order in all settings whose flag is "On" at step 52. Before this process is performed, if the highest order setting whose flag is "On" is setting 3, this process causes setting m to become the highest order.

If setting m is not the highest order in all settings whose flag is "On," the process is completed.

If setting m is the highest order in all settings whose flag is "On," the clock frequency and power voltage are increased. Thus, power supply control section 220 reads the power voltage corresponding to setting m from storage section 210. Thereafter, power supply control section 220 causes power supply section 510 to supply the power voltage that is read from storage section 210 at step 53.

Thereafter, power supply section 510 changes the power voltage that is supplied and then supplies the changed voltage value to CPU 300.

After step 53, control unit 200 waits until the power voltage has changed at step 54. Specifically, control unit 200 waits until power supply unit 500 outputs the voltage change completion notification. The voltage change completion notification that is output in this process is the same as the voltage change completion notification that is output in the foregoing process.

When power supply unit 500 outputs the voltage change completion notification, clock supply section 230 reads the frequency of the clock signal corresponding to setting m from storage section 210. Thereafter, the frequency of the clock signal that is read from storage section 210 is set up (generated) as the frequency of the clock signal supplied to CPU 300 at step 55. Control unit 200 waits until the frequency of the clock signal has been set up, namely the frequency of the clock signal has changed, at step 56.

Thereafter, the frequency of the clock signal that has been set up is supplied from clock supply section 230 to CPU 300.

In contrast, if determination section 240 determines that the flag has changed from "On" to "Off' at step 51, determination section 240 determines whether setting m is the highest order in all settings whose flag is "On" at step 57.

If setting m is not the highest order in all setting whose flag is "On," the process is completed.

If setting m is the highest order in all settings whose flag is "On," a setting that is the second highest order, which is lower than setting m, in all settings whose flag is "On" is retrieved. In this example, it is assumed that setting 3 has been retrieved.

Since the clock frequency and power voltage corresponding to setting m are changed to those corresponding to setting 3, those corresponding to setting m are lowered to those corresponding to setting 3. When the clock frequency and power voltage are lowered, as described above, after the clock frequency is lowered, the power voltage is lowered.

Clock supply section 230 reads the frequency of the clock signal corresponding to setting 3 from storage section 210. Thereafter, the frequency of the clock signal that is read from storage section 210 is set up (generated) as the frequency of the clock signal supplied to CPU 300 at step 58. Power supply control section 220 waits until the frequency of the clock signal has been set up, namely the frequency of the clock signal has changed, at step 59.

Thereafter, the frequency of the clock signal that has been set up is supplied from clock supply section 230 to CPU 300.

Thereafter, power supply control section 220 reads the power voltage corresponding to setting 3 from storage section 210. Thereafter, power supply control section 220 causes power supply section 510 to supply the power voltage that has been read from storage section 210 at step 60.

Thereafter, power supply control section 220 waits until the power voltage has changed at step 61. Specifically, power supply control section 220 waits until power supply unit 500 outputs the voltage change completion notification. Thereafter, the process is completed.

The process performed in power supply unit 500 is the same as that described in Fig. 9.

Power supply control section 220 may control not only the frequency of the clock signal and power voltage supplied to CPU 300, but also the frequency of the clock signal and power voltage that are supplied to peripheral 400.

In this case, the foregoing "function" is substituted for "unit" and the clock frequencies and power voltages corresponding to a plurality of units that compose peripheral 400 are controlled.

Thus, since system LSI 100 controls a clock frequency and a power voltage, software may simply perform a process that notifies system LSI 100 of them. Thus, development of software can be simplified and also low power consumption can be realized.

The fields to which the present invention is applied include mobile terminals such as mobile phones and smart phones and mobile units such as portable game units and mobile PCs.

With reference to the embodiments, the present invention has been described. However, it should be understood by those skilled in the art that the structure and details of the present invention may be changed in various manners without departing from the scope of the present invention.

The present application claims priority based on Japanese Patent Application JP 2011-009722 filed on January 20, 2011, the entire contents of which are incorporated herein by reference in its entirety.

## Claims

1. A control system, comprising:
a power supply unit that supplies a plurality of power voltages; and
a control unit connected to the power supply unit and a CPU,
wherein said control unit includes:
a storage section that correlatively stores power voltages and frequencies of a clock signal that a plurality of functions with which said CPU is provided need;
a power supply control section that causes said power supply unit to supply the highest power voltage from among those power voltages corresponding to functions that operate in said plurality of functions stored in said storage section; and
a clock supply section that supplies the clock signal having the highest frequency from among those frequencies corresponding to functions that operate in said plurality of functions stored in said storage section,
wherein said power supply unit includes:
a power supply section that supplies the power voltage specified by said power supply control section to said CPU; and
an interrupt notification section that notifies said control unit that the power voltage supplied from said power supply section has changed,
wherein if switching from one function to another function occurs in such a manner that the frequency of the clock signal supplied from said clock supply section for the latter function is lower than that for the former function, after the frequency of the clock signal for the latter function has been set up, said power supply control section causes said power supply section to supply the power voltage corresponding to the changed frequency, and
wherein if switching from one function to another function occurs in such a manner that the frequency of the clock signal supplied from said clock supply section for the latter function is higher than that for the former function, after said notification is received from said interrupt notification section, said clock supply section supplies the clock signal having the frequency corresponding to the latter function.

2. The control system as set forth in claim 1, further comprising:
a determination section that determines that switching from one function to another function occurs when a function that does not operate starts up or when a function that operates stops and compares the frequency of the clock signal supplied from said clock supply section when the former function operated with that when the latter function operates,
wherein said power supply control section causes said power supply unit to supply the power voltage based on the comparison result made by said determination section, and
wherein said clock supply section supplies said clock signal based on the comparison result made by said determination section.

3. The control system as set forth in claim 2,
wherein said storage section stores a flag that denotes whether each of said plurality of functions operates and if said determination section determines that switching from one function to another function occurs, said flag is rewritten.

4. The control system as set forth in claim 1,
wherein said storage section stores power voltages and frequencies of the clock signal that the plurality of units, that are connected to the control unit, need,
wherein said power supply control section causes said power supply unit to supply the highest power voltage from among those power voltages corresponding to units that operate in said plurality of units stored in said storage section,
wherein said clock supply section supplies the clock signal having the highest frequency from among those frequencies corresponding to the units that operate in said plurality of units stored in said storage section, and
wherein said power supply section supplies the power voltage specified by said power supply control section.

5. A control device, comprising:
a storage section that stores power voltages and frequencies of a clock signal that a plurality of functions, with which a CPU that is connected to the control device is provided, need;
a power supply control section that causes a power supply unit to supply the highest power voltage from among those power voltages corresponding to functions that operate in said plurality of functions stored in said storage section to said CPU; and
a clock supply section that supplies the clock signal having the highest frequency from among those frequencies corresponding to functions that operate in said plurality of functions stored in said storage section,
wherein if switching from one function to another function occurs in such a manner that the frequency of the clock signal supplied from said clock supply section for the latter function is lower than that for the former function, after the frequency of the clock signal for the latter function has been set up, said power supply control section causes said power supply section to supply the power voltage corresponding to the changed frequency, and
wherein if switching from one function to another function occurs in such a manner that the frequency of the clock signal supplied from said clock supply section for the latter function is higher than that for the former function, after the voltage supplied from said power supply unit has been changed, said clock supply section supplies the clock signal having the frequency corresponding to the latter function.
